# EUROPÄISCHE PATENTANMELDUNG

(11) **EP 3 312 572 A1**
(43) Veröffentlichungstag der Anmeldung: **25.04.2018**
(21) Anmeldenummer: 17189457.9
(22) Anmeldetag: 05.09.2017
(51) Int. Cl.: G01F 23/26, G08C 23/00

(54) **SENSOR UND VERFAHREN ZUR STÖRENTKOPPLUNG**

(30) Priorität: 21.10.2016 DE 102016120135
(71) Anmelder: Sick AG, 79183 Waldkirch (DE)
(72) Erfinder: FRITZ, Kim, 79102 Freiburg (DE); JAHNER, Richard, 79224 Umkirch (DE); SCHELLINGER, Thomas, 79312 Emmendingen (DE)

(57) **Zusammenfassung**

Es wird ein Sensor (10) angegeben, der eine Sonde (12), einen Messkern (16) zur Bestimmung eines Messwerts an der Sonde (12) und eine Datenverarbeitungseinheit (18) zur weiteren Verarbeitung des Messwerts aufweist. Dabei sind der Messkern (16) und die Datenverarbeitungseinheit (18) durch eine erste Verbindungsleitung (34) miteinander verbunden, und die erste Verbindungsleitung (34) weist zur galvanischen Trennung eine stromkompensierte Drossel (38) auf.

## Beschreibung

Die Erfindung betrifft einen Sensor und ein Verfahren zur Störentkopplung nach dem Oberbegriff von Anspruch 1 beziehungsweise 11.

Unter den zahllosen bekannten Sensoren wird in dieser Beschreibung häufig die kapazitive Bestimmung von Füllständen in einem Behälter basiert auf Kapazitätsmessung als illustratives, aber keineswegs beschränkendes Beispiel herangezogen. Bei dieser Füllstandmessung wird eine Sonde in den Behälter eingeführt und die Kapazität zwischen der Sonde und einer Referenz gemessen. Diese Kapazität wird durch die dielektrischen Eigenschaften des Mediums je nach Füllstand verändert. Bei bekannter Dielektrizitätskonstante des Mediums, die beispielsweise durch eine Referenzmessung ermittelt wird, kann somit aus der gemessenen Kapazität der Füllstand berechnet werden. Als Referenz dienen je nach Auslegung des Sensors ein metallischer Behälter, eine eingebrachte Metallfläche oder eine zweite Sonde, die üblicherweise auf Masse liegen. In der EP 2 657 663 A1 ist die Sonde sowohl in Längs- als auch in Umfangsrichtung in eine Vielzahl von Elektroden segmentiert, und die Kapazitätsmessung erfolgt zwischen zwei solchen Elektroden.

Sensoren unterliegen in der Anwendungspraxis einer industriellen elektromagnetischen Umgebung und sind dadurch vielen elektromagnetischen Störern ausgesetzt (EMV, Elektromagnetische Verträglichkeit). Beispiele dafür sind Hochfrequenzströme, Hochfrequenzfelder beziehungsweise schnelle transiente elektrische Störgrößen, Stoßspannungen und Entladungen (Burst, Surge und ESD). Um einen robusten Betrieb gewährleisten zu können, müssen Maßnahmen getroffen werden, die den Sensor gegen solche Störer unempfindlich werden lassen. Dazu ist im Stand der Technik eine ganze Reihe von Maßnahmen bekannt.

Direkt am Eingang des Sensors können Gleichtaktstörer mit einer stromkompensierten Drossel unterdrückt werden. Eine stromkompensierte Drossel oder Gleichtaktdrossel hat mehrere gleiche Wicklungen, die gegensinnig vom Arbeitsstrom durchflossen werden, sodass sich deren magnetische Felder im Kern der Drossel aufheben. Geometrie und Aufbau einer stromkompensierten Drossel erlauben aber keine einfache Skalierung für eine größere Anzahl von Einzelleitern. Für die Anwendung in einem Sensor sind daher, zumal mit der Vorgabe eines realistischen Kostenrahmens, nur stromkompensierte Drosseln mit maximal vier Leitern verfügbar. Es können nicht einfach zwei kleinere Drosseln eingesetzt werden, um die Anzahl an Leitern zu vergrößern, da sich so die magnetischen Felder keineswegs weiterhin aufheben. Für Sensoren mit einer größeren Anzahl von beispielsweise acht Einzelleitern kommt daher der herkömmliche Ansatz mit einer stromkompensierten Drossel am Eingang nicht in Frage.

Weiterhin denkbar ist eine galvanische Trennung am Eingang des Sensors, um die Impedanz im Störstrompfad zu erhöhen. Hier ergibt sich eine ähnliche Problematik, denn das Vorgehen wird bei mehreren Leitungen sehr aufwändig, die alle galvanisch getrennt werden müssten. Daher ist dieser Ansatz letztlich kein praktikabler Weg.

Mit Hilfe einer Schirmung der empfindlichen Bereiche etwa mittels Schirmblech kann grundsätzlich die kapazitive Kopplung zwischen den empfindlichen Schaltungsteilen und PE (Schutzerde) reduziert werden. Beispielsweise bei Gleichtaktstörern in einem kapazitiven Messsystem verläuft aber der Störpfad, der durch die Schirmung unterbrochen werden soll, durch den Sensor und dessen Sonde gegen PE. Die Schirmung müsste also die Sonde umschließen, wodurch eine kapazitive Vermessung der Sondenumgebung unmöglich würde.

Es gibt weiterhin induktive Koppelbausteine für eine galvanische Trennung, die gegen hochfrequente Gleichtaktstörer wirken und daher für hochfrequente Signale hochimpedant sein sollen (AC-Entkopplung). Bei deren Anwendung in einem Sensor muss Leistung übertragen werden, um den entkoppelten Bereich mit Energie zu versorgen, und zugleich müssen Daten übertragen werden, um beispielsweise Messinformationen aus dem entkoppelten Bereich zu übermitteln. Hier zeigt sich ein Problem bei der Leistungsübertragung, da bei wenig kapazitiver Kopplung zwischen entkoppeltem und übrigem Bereich starke Emissionen erzeugt werden. Letztlich lassen daher solche induktiven Koppelbausteine nur die Wahl zwischen zwei ungeeigneten Lösungen, nämlich entweder der gewünschten AC- und DC-Entkopplung bei zu hohen Emissionen, die praktisch nicht verwendet werden darf, und einer reinen DC-Entkopplung mit geringen Emissionen, die zwar zulässig, aufgrund hochfrequenter Störer jedoch nicht ausreichend ist.

Prinzipiell kann den Störern ein definierter niederimpedanter Pfad gegen Schutzerde angeboten werden. Das ist aber bei Kunststoffgehäusen oder Sensoren ohne PE-Anschluss nicht möglich.

Wenn es schon nicht möglich ist, Störsignale aus den empfindlichen Schaltungsteilen des Sensors fernzuhalten, so besteht prinzipiell noch die weitere Möglichkeit, die Messung so zu gestalten, dass sie davon nicht beeinträchtigt wird. Das löst das Problem nicht ursächlich und ist deshalb oft anfälliger. Beispielsweise kann die Messfrequenz derart gewählt werden, dass sie nicht von der Störerfrequenz beeinflusst wird. Das schränkt aber die Wahl und Auslegung des Messkerns erheblich ein. Weicht man allen Störerfrequenzen zwischen 150 kHz - 2,7 GHz nach unten hin aus, so wird die Messgeschwindigkeit stark eingeschränkt, und es entstehen neue Kollisionen mit anderen, etwa netzfrequenten Störern. Ein Ausweichen nach oben scheitert an der technischen Umsetzbarkeit und zumindest den Kosten.

Die Messsignale können auch durch Filterung von den Störern befreit werden, was sowohl schaltungs- als auch auswertungstechnisch möglich ist. Liegen aber Messfrequenzen um Störer im gleichen Frequenzbereich, dann sind sie durch solche Filter gar nicht voneinander zu trennen. Das Filter würde Messinformation unterdrücken.

Folglich ist keine der herkömmlichen Maßnahmen dazu geeignet, einen Sensor unempfindlich gegen EMV-Störer zu machen.

Es ist daher Aufgabe der Erfindung, für ausreichende Robustheit eines Sensors gegen EMV-Störer zu sorgen.

Diese Aufgabe wird durch einen Sensor und ein Verfahren zur Störentkopplung nach Anspruch 1 beziehungsweise 11 gelöst. Der Sensor weist eine Sonde und einen Messkern auf, um mit Hilfe der Sonde Messungen vorzunehmen, beispielsweise Füllstandmessungen. Eine Datenverarbeitungseinheit bereitet die Ergebnisse der Messung zu dem gewünschten Messergebnis auf. Die Datenverarbeitungseinheit stellt Steuer- und Auswertungsfunktionalität des Sensors bereit und kann für den Messkern auch als Versorgungseinheit dienen. Der Messkern arbeitet eng am physikalischen Messprinzip der Sonde und erzeugt vorzugsweise erst einmal nur Rohdaten.

Die Erfindung geht nun von dem Grundgedanken aus, die Störentkopplung ins Innere des Sensors zu verlagern. Die Störentkopplung erfolgt demnach weder am Eingang noch am Messfrontend im Übergang zur Sonde, sondern innerhalb der Steuer- und Auswertungsfunktionalität zwischen Messkern und Datenverarbeitungseinheit. Dazu ist in einer ersten Verbindungsleitung zwischen Messkern und Datenverarbeitungseinheit eine stromkompensierte Drossel vorgesehen. Die erfindungsgemäße Lösung nimmt dabei in Kauf, dass Störungen noch in den Sensor gelangen, jedoch nur bis zu der Datenverarbeitungseinheit. Dafür muss die stromkompensierte Drossel nicht alle externen Leitungen des Sensors zum Messkern führen, deshalb reichen weniger Einzelleitungen aus, so dass die benötigte stromkompensierte Drossel auch tatsächlich verfügbar ist. Der Messkern wird auch auf diese Weise ausreichend geschützt.

Die Erfindung hat den Vorteil, dass eine emissionsarme Energie- und Signalübertragung erreicht wird. Der Sensor ist robust gegen EMV-Störer im Bereich der Messfrequenz, ohne die Messung zu beeinflussen. Die Erfindung löst das Problem einer ausreichenden elektromagnetischen Verträglichkeit und überwindet dabei die einleitend genannten Nachteile der bekannten Maßnahmen.

Der Messkern und die Datenverarbeitungseinheit sind bevorzugt jeweils in sich kompakt angeordnet und voneinander räumlich getrennt. Das Layout der Elektronik des Sensors sieht also ein Layout mit klarer räumlicher Trennung von Messkern und Datenverarbeitungseinheit vor. Dadurch werden unerwünschte Kopplungen vermieden, und die Entkopplung in der ersten Verbindungsleitung führt zu einer wirksamen Störunterdrückung.

Der Sensor weist bevorzugt einen externen Anschluss auf, wobei der externe Anschluss mehr Einzelleitungen aufweist als die erste Verbindungsleitung. Über den externen Anschluss kommuniziert die Datenverarbeitungseinheit mit der Außenwelt, und außerdem wird der Sensor hierüber versorgt. Der externe Anschluss hat deshalb häufig zahlreiche Pole oder Einzelleitungen, insbesondere mehr als vier Anschlüsse, so dass eine eingangsseitige Entkopplung mit einer stromkompensierten Drossel mangels entsprechender Bauteile nicht möglich wäre. Indem nur ein Teil der externen Leitungen über die erste Verbindungsleitung an den Messkern weitergeführt wird, kann die Entkopplung doch durch eine stromkompensierte Drossel erfolgen.

Der Messkern wird bevorzugt über die erste Verbindungsleitung aus der Datenverarbeitungseinheit versorgt. Die erste Verbindungsleitung ist also für die Energieübertragung an den Messkern zuständig, und zwar vorzugsweise nur dafür. Dementsprechend hat dann die stromkompensierte Drossel die Aufgabe der Entkopplung der Energieübertragung.

Der Messkern und die Datenverarbeitungseinheit sind bevorzugt durch eine zweite Verbindungsleitung miteinander verbunden, wobei die zweite Verbindungsleitung einen weiteren Entkopplungsbaustein aufweist. Die zweite Verbindungsleitung ergänzt die Verbindung über die erste Verbindungsleitung, insbesondere um mehr Einzelleitungen zwischen Datenverarbeitungseinheit und Messkern zu führen, als das mit einer praktisch verfügbaren stromkompensierten Drossel möglich wäre. Auch in der zweiten Verbindungsleitung erfolgt eine Störentkopplung, wofür ein weiterer Entkopplungsbaustein zuständig ist und nicht die stromkompensierte Drossel der ersten Verbindungsleitung. Der weitere Entkopplungsbaustein gleicht insbesondere DC-Unterschiede zwischen Messkern und Datenverarbeitungseinheit aus

Die zweite Verbindungsleitung ist bevorzugt eine Datenleitung zum Datenaustausch zwischen Messkern und Datenverarbeitungseinheit. Damit ist die Verbindung zwischen Datenverarbeitungseinheit und Messkern auf mindestens zwei Verbindungsleitungen verteilt. Sie haben unterschiedliche Aufgaben der Versorgung und Datenübertragung. Dafür sind unterschiedliche Entkopplungskonzepte über die stromkompensierte Drossel beziehungsweise den weiteren Entkopplungsbaustein vorgesehen.

Der Datenaustausch erfolgt bevorzugt optisch, induktiv oder kapazitiv. Dementsprechend ist ein Optokoppler beziehungsweise ein induktiver oder kapazitiver Entkopplungsbaustein in der zweiten Verbindungsleitung vorgesehen. Der weitere Entkopplungsbaustein ist folglich für die entsprechende Datenübertragung geeignet und keine stromkompensierte Drossel.

An dem weiteren Entkopplungsbaustein sind bevorzugt Schutzdioden angeordnet. Damit können Spitzen von Störern abgeleitet werden, mit denen der weitere Entkopplungsbaustein nicht mehr zurechtkommt, und so Beschädigungen der Elektronik des Sensors vermieden werden.

Die Sonde weist bevorzugt mindestens eine Elektrode auf, und der Messkern ist zur Bestimmung einer Kapazität an der Elektrode ausgebildet. Eine kapazitive Messung ist besonders empfindlich gegen Störungen, die dem kapazitiven Messsignal entsprechen. Daher wirkt sich die erfindungsgemäße Störentkopplung besonders vorteilhaft aus.

Die Sonde weist bevorzugt in einer Längsrichtung mehrere aufeinanderfolgende Segmente und in jedem Segment mehrere Elektroden auf, wobei der Messkern die Kapazität zwischen Elektroden eines Segments bestimmt. Anders als eine kapazitive Sonde, die gegen eine Gegenelektrode oder Behälterwand misst, sind hier die Messsignale besonders klein. Deshalb unterstützt eine wirksame Störentkopplung eine präzise und robuste Messung.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: ein vereinfachtes Schaltbild eines Sensors mit Entkopplung zwischen Messkern und übriger Elektronik; und
- Fig. 2: eine schematische Darstellung eines kapazitiven Füllstandsensors mit mehrfach segmentierter Sonde.

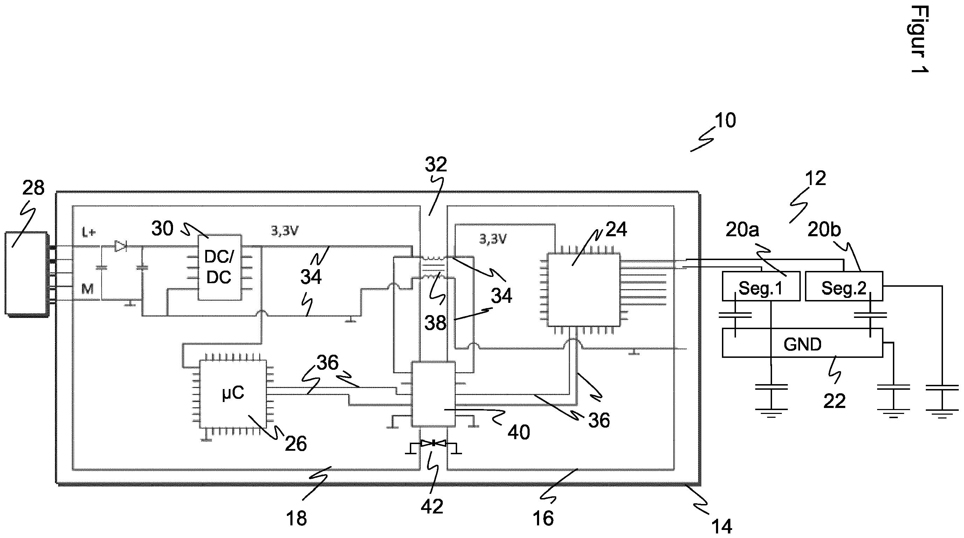

Figur 1 zeigt ein vereinfachtes Schaltbild eines Sensors 10. Der Sensor 10 weist eine Sonde 12 und einen Sensorkörper 14 auf, in dem sich die Elektronik des Sensors 10 befindet. Der Sensorkörper 14 wiederum lässt sich in zwei Bereiche unterteilen, nämlich einen Messkern 16 und eine Datenverarbeitungseinheit 18.

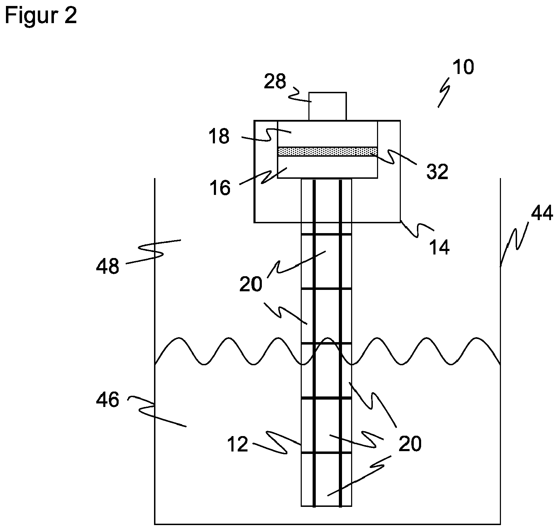

Die Sonde 12 ist in diesem Ausführungsbeispiel eine kapazitive Sonde, wobei rein beispielhaft zwei Elektrodensegmente 20a-b und eine Masseelektrode 22 dargestellt sind. In anderen Ausführungsformen kann es ebenso nur ein Elektrodensegment oder eine Vielzahl von Elektrodensegmenten geben, ebenso wie die Masseelektrode tatsächlich als Gegenelektrode Teil der Sonde, aber auch beispielsweise eine Behälterwand oder ein anderes Umgebungsobjekt sein kann. Weiterhin ist, wie weiter unten im Zusammenhang mit Figur 2 erläutert, auch eine Messung zwischen Elektrodensegmenten 20a-b ohne Bezug zu einer Masseelektrode denkbar. Da die Erfindung sich mit der Störentkopplung befasst, wird die Ausgestaltung der Sonde und des Messprinzips ohnehin nur rein beispielhaft und zur Vervollständigung beschrieben. Die Störentkopplung ist für kapazitive Sensoren besonders vorteilhaft, weil kapazitive Messung und kapazitive Störeinkopplung einander sonst überlagern und so das Messergebnis stark verfälschen oder die Messung unmöglich machen könnten. Es sind aber auch andere Messprinzipien denkbar.

Der Messkern 16 weist eine Schaltung oder einen Digitalbaustein 24 zur Durchführung der kapazitiven Messung mit Hilfe der Sonde 12 auf und ist dazu mit den Elektrodensegmenten 20a-b verbunden. Digitalbausteine 24 zur Durchführung kapazitiver Messungen sind an sich bekannt und werden hier nicht näher erläutert. Es können sich außer den dargestellten Leitungen noch weitere Schaltelemente in dem Messkern 16 befinden.

In der Datenverarbeitungseinheit 18 ist mindestens ein Mikroprozessor 26, alternativ ein ASIC, ein FPGA oder ein ähnlicher Digitalbaustein vorgesehen. Der Mikroprozessor 26 ist für die nicht unmittelbar mit der Messung an der Sonde 12 zusammenhängenden Aufgaben des Sensors 10 zuständig, wie eine Aufbereitung von Messrohdaten, eine Verrechnung zu einem gewünschten Ausgabewert und eine Kommunikation mit einem Benutzer oder einer übergeordneten Steuerung. Über einen externen Anschluss 28 wird der Sensor 10 versorgt, es werden Messergebnisse ausgegeben, insbesondere in Form von Schaltereignissen, Parameter eingelesen und dergleichen. Weiterhin dargestellt in der Datenverarbeitungseinheit 18 ist ein Gleichspannungswandler 30, und wie schon in dem Messkern 16 können auch in der Datenverarbeitungseinheit 18 über die noch dargestellten Leitungen hinaus noch weitere Schaltelemente vorhanden sein, auf die hier nicht näher eingegangen wird.

Das Layout im Sensorkörper 14 ist so gestaltet, dass Messkern 16 und Datenverarbeitungseinheit 18 auch räumlich eine Einheit bilden und zwischen einander ein gewisser räumlicher Abstand 32 eingehalten wird. Dabei sind Messkern 16 und Datenverarbeitungseinheit 18 über eine erste Verbindungsleitung 34 und eine zweite Verbindungs-leitung 36 miteinander verbunden. Die beiden Verbindungsleitungen 34, 36 können mehr Einzelleitungen aufweisen als dargestellt.

Die erste Verbindungsleitung 34 ist für die Versorgung zuständig. Die erste Verbindungsleitung 34 weist im Bereich des Abstands 32 eine stromkompensierte Drossel 38 zur galvanischen Trennung von Messkern 16 und Datenverarbeitungseinheit 18 auf. Die zweite Verbindungsleitung 36 dient der Kommunikation. Auf diese Weise kann die Datenverarbeitungseinheit 18 den Messkern 16 steuern insbesondere Messparameter setzen, Messungen starten und Messergebnisse erhalten. Die zweite Verbindungseinheit 36 weist im Bereich des Abstands 32 einen weiteren Entkopplungsbaustein 40 auf, beispielsweise einen induktiven oder kapazitiven Entkopplungsbaustein oder einen Optokoppler.

Um die erfindungsgemäße Entkopplung zu verstehen, sei nun kurz unterstellt, dass die stromkompensierte Drossel 38 und der weitere Entkopplungsbaustein 40 nicht vorhanden wären. Die Störungen suchen sich den Weg der niedrigsten Impedanz, und dieser Störpfad verläuft in der geschilderten Situation von dem externen Anschluss 28, über den die Störungen eingekoppelt werden, durch die Datenverarbeitungseinheit 18 in den Messkern 16 und weiter auf die Masseelektrode 22, womöglich auch auf dem Weg kapazitiver Kopplung über die Elektrodensegmente 20a-b. Es ist klar, dass dies die Messung empfindlich beeinflusst. Die einleitend diskutierten bekannten Maßnahmen, um diese Ausbreitung der Störungen zu verhindern, scheitern aus den unterschiedlichen dort genannten Gründen.

Erfindungsgemäß wird durch die galvanische Trennung zwischen Messkern 16 und Datenverarbeitungseinheit 18 die Impedanz des Störpfades deutlich erhöht. Somit wird eine hochimpedante Barriere geschaffen, die den Störpfad der EMV-Störer, insbesondere Gleichtaktstörer, sehr hochimpedant macht.

Die stromkompensierte Drossel 38 in der ersten Verbindungsleitung 34 zur Versorgung ermöglicht eine Leistungsübertragung ohne die einleitend beschriebenen hohen Emissionen eines induktiven Entkoppelbausteins. Die galvanische Trennung wird lediglich für AC-Signale hochimpedant und befiltert somit den Störer nur im Bereich der Messfrequenz und darüber. Die Entkopplung wird durch die klare Trennung des Messkerns 16 von der Datenverarbeitungseinheit 18 und damit insbesondere einem Rest einer Leiterplatte unterstützt.

Die zweite Verbindungsleitung 36 dient der Kommunikation und muss daher keine Leistung übertragen. Daher sind an den weiteren Entkopplungsbaustein 40 andere Anforderungen gestellt, und es kann beispielsweise ein induktiver ein Entkoppelbaustein eingesetzt werden. Eine direkte Verbindung ohne weiteren Entkopplungsbaustein 40 würde keine Spannungsdifferenzen zwischen Messkern 16 und Datenverarbeitungseinheit 18 auffangen und könnte zu Problemen in der Kommunikation und Datenverarbeitung oder sogar Beschädigungen führen. Um zusätzlich besonders hohe Spannungsdifferenzen beispielsweise bei Störspitzen aufzufangen, können weitere Schutzelemente wie Schutzdioden 42 vorgesehen sein.

Die erfindungsgemäße galvanische Trennung mit Hilfe der stromkompensierten Drossel 38 erst innerhalb des Sensorkörpers 14 kurz vor dem Messkern 16 löst gleich mehrere Probleme. Die Energie- und Signalübertragung ist emissionsarm und hat nur eine sehr geringe kapazitive Kopplung, so dass der Störpfad für hochfrequente Störer hochimpedant bleibt. Ein Störer wird auch dann gefiltert, wenn Störfrequenz und Messfrequenz identisch sind. Die Anzahl der Einzelleitungen des Sensors 10 an seinem externen Anschluss 28 wird nicht mehr durch die maximal vier Leitungen einer verfügbaren stromkompensierten Drossel begrenzt. Es können folglich auch Sensoren 10 mit mehr als vier externen Leitungen robust gegen EMV-Störer gemacht werden. Die besonders empfindliche Kapazitätsmessung durch Sonde 12 und Messkern 16 wird durch EMV-Störer nicht mehr relevant beeinflusst.

Figur 2 zeigt noch ergänzend in einer schematischen Seitenansicht einen Sensor 10 in einer Ausführungsform als kapazitiver Füllstandsensor, der in einem Tank oder Behälter 44 mit einem Medium 46 angebracht ist. Von dem Sensorkörper 14 sind der übersichtlichen Darstellung halber nur einige der zu Figur 1 erläuterten Merkmale gezeigt. Die Sonde 12 ragt in das Medium 46 hinein. Aufgrund der unterschiedlichen dielektrischen Eigenschaften des Mediums 46 gegenüber der üblicherweise darüber befindlichen Luft 48 ändern sich die kapazitiven Eigenschaften der Sonde 12 in Abhängigkeit von dem Füllstand. Dies wird über Kapazitätsmessungen des Messkerns 16 in dem Sensorkörper 14 bestimmt. Dazu werden Kapazitäten zwischen einzelnen Paaren von Elektrodensegmenten 20 oder Gruppen von Elektrodensegmenten 20 gemessen, indem beispielsweise durch den Messkern 16 eine definierte Ladungsmenge aufgeladen und die dabei erzeugte Spannung gemessen wird.

Aus den gemessenen Kapazitäten errechnet die Datenverarbeitungseinheit 18 einen Füllstandwert für die Füllhöhe des Mediums 46 in dem Behälter 44 und bei bekannter Behältergeometrie auch für das Volumen an vorhandenem Medium 46. Bei dem Medium 46 kann es sich beispielsweise um eine beliebige Flüssigkeit, aber auch um Schüttgut oder Granulate handeln.

Dies ist nur ein Ausführungsbeispiel. Ein kapazitiver Füllstandsensor kann auch anders arbeiten und beispielsweise Kapazitäten zu einer Gegenelektrode oder der Behälterwand messen. Andere kapazitive Sensoren arbeiten als Näherungssensor, zur Anwesenheitsfeststellung von Objekten oder als Grenzwächter. Die erfindungsgemäße Störentkopplung ist auch nicht auf kapazitive Sensoren beschränkt, sondern kann auch in anderen Sensoren genutzt werden, beispielsweise induktiven Sensoren oder anderen.

## Patentansprüche

1. Sensor (10), insbesondere Füllstandsensor, der eine Sonde (12), einen Messkern (16) zur Bestimmung eines Messwerts an der Sonde (12) und eine Datenverarbeitungseinheit (18) zur weiteren Verarbeitung des Messwerts aufweist,
**dadurch gekennzeichnet,**
**dass** der Messkern (16) und die Datenverarbeitungseinheit (18) durch eine erste Verbindungsleitung (34) miteinander verbunden sind und dass die erste Verbindungsleitung (34) zur galvanischen Trennung eine stromkompensierte Drossel (38) aufweist.

2. Sensor (10) nach Anspruch 1,
wobei der Messkern (16) und die Datenverarbeitungseinheit (18) jeweils in sich kompakt angeordnet und voneinander räumlich getrennt sind.

3. Sensor (10) nach Anspruch 1 oder 2,
der einen externen Anschluss (28) aufweist, wobei der externe Anschluss (28) mehr Einzelleitungen aufweist als die erste Verbindungsleitung (34).

4. Sensor (10) nach einem der vorhergehenden Ansprüche,
wobei der Messkern (16) über die erste Verbindungsleitung (34) aus der Datenverarbeitungseinheit (18) versorgt wird.

5. Sensor (10) nach einem der vorhergehenden Ansprüche,
wobei der Messkern (16) und die Datenverarbeitungseinheit (18) durch eine zweite Verbindungsleitung (36) miteinander verbunden sind, wobei die zweite Verbindungsleitung (36) einen weiteren Entkopplungsbaustein (40) aufweist.

6. Sensor (10) nach Anspruch 5,
wobei die zweite Verbindungsleitung (36) eine Datenleitung zum Datenaustausch zwischen Messkern (16) und Datenverarbeitungseinheit (18) ist.

7. Sensor (10) nach Anspruch 6,
wobei der Datenaustausch optisch, induktiv oder kapazitiv erfolgt.

8. Sensor (10) nach einem der Ansprüche 5 bis 7,
wobei an dem weiteren Entkopplungsbaustein (40) Schutzdioden (42) angeordnet sind.

9. Sensor (10) nach einem der vorhergehenden Ansprüche,
wobei die Sonde (12) mindestens eine Elektrode (20) aufweist und der Messkern (16) zur Bestimmung einer Kapazität an der Elektrode (20) ausgebildet ist.

10. Sensor (10) nach Anspruch 9,
wobei die Sonde (12) in einer Längsrichtung mehrere aufeinanderfolgende Segmente und in jedem Segment mehrere Elektroden (20) aufweist, wobei der Messkern (16) die Kapazität zwischen Elektroden (20) eines Segments bestimmt.

11. Verfahren zur Störentkopplung in einem Sensor (10), der eine Sonde (12), einen Messkern (16) und eine Datenverarbeitungseinheit (18) aufweist, mit der Sonde (12) einen Messwert bestimmt und den Messwert in der Datenverarbeitungseinheit (18) weiterverarbeitet,
**dadurch gekennzeichnet,**
**dass** in einer ersten Verbindungsleitung (34) zwischen Messkern (16) und Datenverarbeitungseinheit (18) zur galvanischen Trennung eine stromkompensierte Drossel (38) angeordnet wird.
